Europäisches Patentamt

European Patent Office

Office européen des brevets

(19)

(11) EP 1 509 011 A2

(12) EUROPEAN PATENT APPLICATION

(43) Date of publication:
23.02.2005 Bulletin 2005/08

(51) Int Cl.⁷: H04L 12/56

(21) Application number: 04019416.9

(22) Date of filing: 16.08.2004

| | |
|---|---|
| (84) Designated Contracting States:<br>AT BE BG CH CY CZ DE DK EE ES FI FR GB GR HU IE IT LI LU MC NL PL PT RO SE SI SK TR<br>Designated Extension States:<br>AL HR LT LV MK<br><br>(30) Priority: 16.08.2003 KR 2003056733<br>01.10.2003 KR 2003068506<br><br>(71) Applicant: Samsung Electronics Co., Ltd.<br>Suwon-si, Gyeonggi-do (KR)<br><br>(72) Inventors:<br>• Lee, Ju-Ho<br>Yeongtong-gu Suwon-si Gyeonggi-do (KR) | • Kwak, Yong-Jun<br>Yeongtong-gu Suwon-si Gyeonggi-do (KR)<br>• Choi, Sung-Ho<br>Yeongtong-gu Suwon-si Gyeonggi-do (KR)<br>• Heo, Youn-Hyoung<br>Yeongtong-gu Suwon-si Gyeonggi-do (KR)<br>• Kim, Young-Bum<br>Yeongtong-gu Suwon-si Gyeonggi-do (KR)<br><br>(74) Representative: Grünecker, Kinkeldey,<br>Stockmair & Schwanhäusser Anwaltssozietät<br>Maximilianstrasse 58<br>80538 München (DE) |

(54) **Method and apparatus for assigning scheduling for uplink packet transmission in a mobile communication system**

(57)    A method in a UE of transmitting buffer state information and CSI for scheduling an uplink packet data service in a mobile communication system supporting the uplink packet data service is provided. The buffer state information indicates a state of a data buffer for storing packet data to be transmitted from the UE and the CSI indicates an uplink transmit power of the UE. The UE acquires different transmission intervals of the buffer state information and the CSI, initially transmits the buffer state information and the CSI, if the amount of packet data stored in the buffer is equal to or greater than a predetermined threshold, and periodically transmits the buffer state information and the CSI at the transmission intervals.

FIG.8

**Description**

**BACKGROUND OF THE INVENTION**

1. Field of the Invention

The present invention relates generally to a mobile communication system, and in particular, to a method and apparatus for efficiently transmitting and receiving scheduling assignment information for uplink packet transmission.

2. Description of the Related Art

An asynchronous WCDMA (Wideband Code Division Multiple Access) communication system uses an EUDCH (Enhanced Uplink Dedicated CHannel) to provide a high-rate packet data service on the uplink. The EUDCH was proposed to improve the performance of uplink packet transmission in asynchronous CDMA communication systems. Besides the existing HSDPA (High Speed Downlink Packet Access) schemes, AMC (Adaptive Modulation and Coding) and HARQ (Hybrid Automatic Retransmission reQuest), the EUDCH technology utilizes new techniques using a short TTI (Transmission Time Interval). Also, Node B control scheduling is applied to uplink channels. The Node B control scheduling of the uplink is very different from downlink scheduling.

Orthogonality is not maintained between uplink signals from a plurality of UEs (User Equipments). Therefore, the uplink signals interfere with each other. As a Node B receives more uplink signals, interference with an uplink signal from a particular UE increases, thereby degrading the reception performance of the Node B. Although the problem can be overcome by increasing the uplink transmit power, the uplink signal with the increased transmit power in turn interferes with other uplink signals. Therefore, the Node B limits uplink signals that can be received with an acceptable reception performance as shown in Equation (1),

$$ROT = I\_0/N\_0 \tag{1}$$

where I_0 is the total receiving wideband power spectral density of the Node B and N_0 is the thermal noise power spectral density of the Node B. ROT represents uplink radio resources available to Node B to receive the EUDCH packet data service.

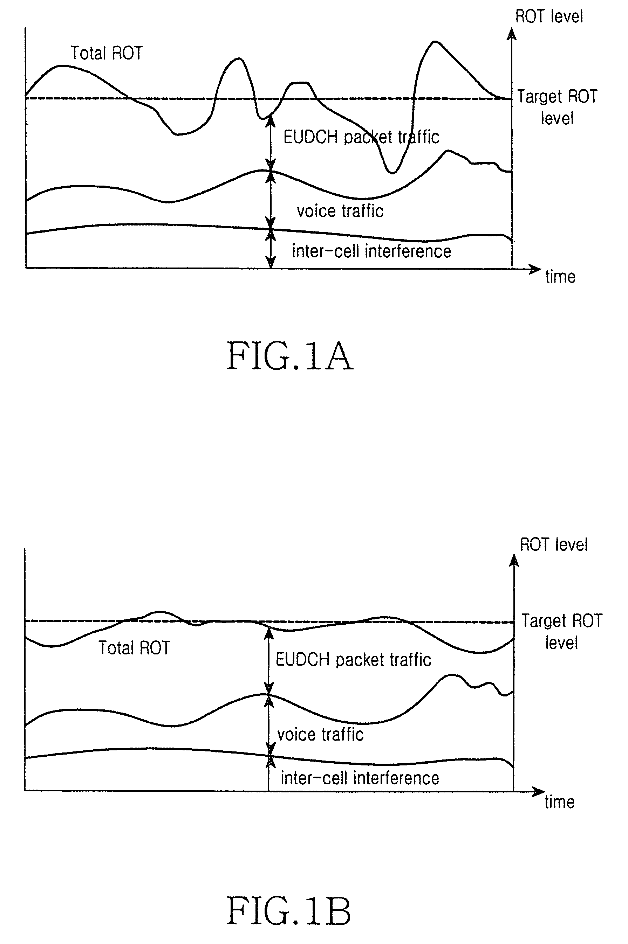

FIGs. 1A and 1B are graphs illustrating changes in uplink radio resources available to the Node B. As illustrated in FIGs. 1A and 1B, the uplink radio resources are the sum of ICI (Inter-Cell Interference), voice traffic, and EUDCH packet traffic.

More specifically, FIG. 1A illustrates changes in a total ROT when Node B control scheduling is not used. With no scheduling of EUDCH packet traffic, a plurality of UEs may transmit data at high rates and at the same time. In this case, the total ROT exceeds a target ROT and the reception performance of the uplink signals is degraded.

FIG. 1B illustrates changes in the total ROT when the Node B control scheduling is used. The Node B control scheduling prevents the UEs from transmitting data at high rates at the same time. When a high rate is allowed for a particular UE, low rates are allowed for other UEs, such that the total ROT does not exceed the target ROT. As a result, the Node B control scheduling ensures a constant reception performance all the time.

The Node B notifies UEs using the EUDCH when EUDCH data transmission is available, or adjusts EUDCH data rates for them, utilizing requested data rates or CSI (Channel State Information) representing uplink quality from the UEs. In this Node control B scheduling, the Node B assigns data rates to the UEs, such that the total ROT does not exceed the target ROT in order to improve system performance. The Node B can assign a low data rate to a remote (far away) UE, and a high data rate to a nearby UE.

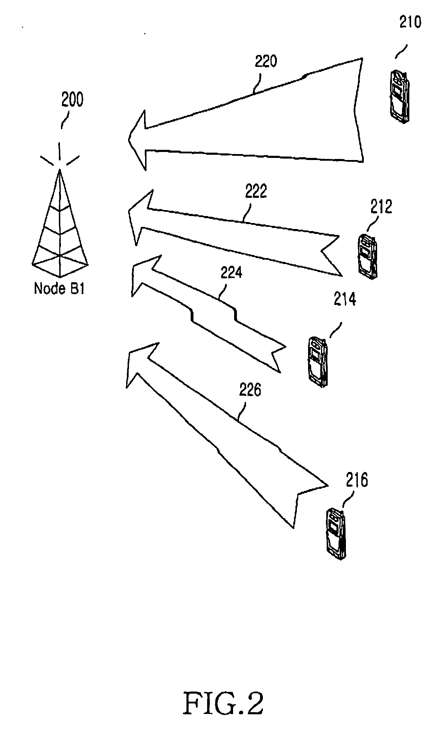

FIG. 2 illustrates the basic concept of the Node B control scheduling of the EUDCH. Referring to FIG. 2, reference numeral 200 denotes a Node B supporting the EUDCH and reference numerals 210 to 216 denote UEs using the EUDCH. When the data rate of a UE increases, the Node B receives data from the UE at an increased reception power. Therefore, the ROT of the UE contributes more to the total ROT. If the data rate of another UE decreases, the Node B receives data from the UE at a decreased reception power. Therefore, the ROT of the UE contributes less to the total ROT. The Node B schedules the EUDCH packet data considering the relationship between data rates and radio resources and UEs-requested data rates.

In FIG. 2, the UEs 210 to 216 transmit packet data at different uplink transmit power levels according to the distances between them and the Node B 200. The farthest UE 210 transmits packet data at the highest uplink transmit power level 220, while the nearest UE 214 transmits packet data at the lowest uplink transmit power level 224. The Node B schedules uplink data transmission in the manner that makes the transmit power of the uplink channel is inversely proportional to its data rate in order to improve system performance, while maintaining the total ROT and reducing ICI. Therefore, the Node B assigns a relatively low data rate to the UE 210 having the highest transmit power and a relative high data rate to the UE 214 having the lowest transmit power.

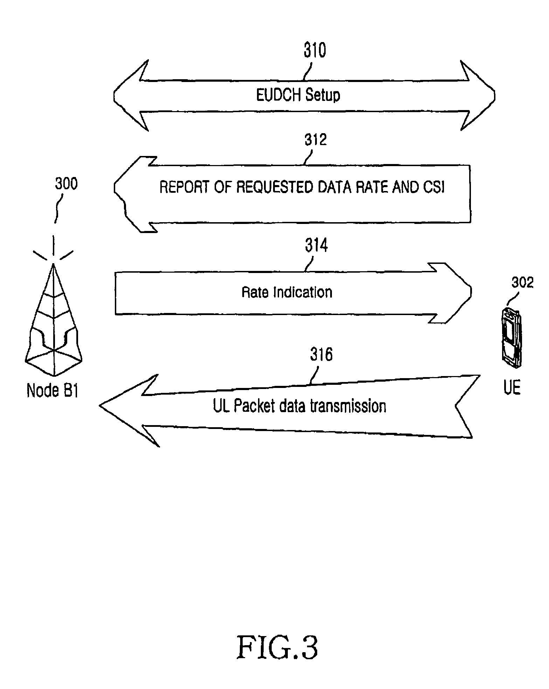

FIG. 3 illustrates an operation for assigning a data rate for EUDCH packet transmission and transmitting packet data at the assigned data rate in a UE. Referring to FIG. 3, an EUDCH is established between a Node B 300 and a UE 302 in step 310. Step 310 involves transmission and reception of messages on dedicated transport channels. In step 312, the UE 302 notifies the Node B 300 of a desired data rate and uplink CSI. The uplink CSI includes the uplink transmit power and/or transmit power margin of the UE.

The Node B 300 estimates the uplink channel state by comparing the uplink transmit power with uplink received power. If the difference between the uplink transmit power and the uplink received power is small, the uplink channel state is good. If the difference is large, the uplink channel state is bad. When the UE transmits only the transmit power margin, the Node B 300 estimates the uplink transmit power by subtracting the transmit power margin from a known maximum available transmit power of the UE 302. The Node B 300 determines a maximum available data rate for the UE based on the estimated uplink channel state and the requested data rate.

In step 314, the Node B 300 notifies the UE 302 of the maximum data rate by scheduling assignment information. The UE 302 selects a data rate equal to or less than the maximum data rate and transmits packet data at the selected data rate to the Node B 300 in step 316.

To transmit all packet data of an EUDCH data buffer to the Node B 300, the UE 302 must receive the scheduling assignment information from the Node B 300 at every predetermined interval. If the UE 302 transmits buffer status information and CSI at every scheduling interval, the resulting signaling overhead decreases the efficiency of uplink packet transmission. Therefore, there is a need for an efficient scheduling scheme to prevent the uplink signaling overhead.

## SUMMARY OF THE INVENTION

Therefore, the present invention has been designed to substantially solve at least the above problems and/ or disadvantages and to provide at least the advantages below. Accordingly, an object of the present invention is to provide a method and apparatus for reducing uplink signaling overhead in uplink packet transmission.

Another object of the present invention is to provide a method and apparatus for controlling the transmission intervals of buffer status information and CSI on the uplink to reduce signaling overhead.

A further object of the present invention is to provide a method and apparatus for efficiently transmitting uplink packets by controlling the transmission intervals of buffer status information and CSI.

Still another object of the present invention is to provide a method and apparatus for efficiently utilizing radio resources by controlling the transmission intervals of buffer status information and CSI.

The above and other objects are achieved by providing a method of transmitting and receiving buffer state information and CSI for scheduling of an uplink packet data service in a mobile communication system.

According to an aspect of the present invention, in a method in a UE of transmitting buffer state information and CSI for scheduling of an uplink packet data service in a mobile communication system supporting the uplink packet data service, the UE acquires different transmission intervals of the buffer state information and the CSI, initially transmits the buffer state information and the CSI if the amount of packet data stored in a buffer is equal to or greater than a predetermined threshold, and periodically transmits the buffer state information and the CSI at the transmission intervals.

According to another aspect of the present invention, in a method in a Node B of receiving buffer state information and CSI from a UE for scheduling of an uplink packet data service in a mobile communication system supporting the uplink packet data service, the Node B acquires different reception intervals of the buffer state information and the CSI, determines if the buffer state information and the CSI have been initially received, and periodically receives the buffer state information and the CSI at the reception intervals, if the buffer state information and the CSI have been initially received.

## BRIEF DESCRIPTION OF THE DRAWINGS

The above and other objects, features, and advantages of the present invention will become more apparent from the following detailed description when taken in conjunction with the accompanying drawings in which:

FIG. 1A illustrates changes in the uplink radio resources of a Node B in the case where Node B control scheduling is not used;
FIG. 1B illustrates changes in the uplink radio resources of the Node B in the case where the Node B control scheduling is used;
FIG. 2 illustrates the Node B and UEs in an uplink packet transmission;

FIG. 3 illustrates information exchanged for uplink packet transmission between the Node B and a UE;

FIG. 4 is a block diagram of a UE transmitter for transmitting uplink packets;

FIGs. 5A and 5B respectively illustrate the structure of a scheduling control channel (EU-SCHCCH) for receiving uplink packets and the structure of an EU-SCHCCH transmitter in the Node B;

FIG. 6 illustrates continuous transmission of buffer status information and CSI by which Node B control scheduling is carried out;

FIG. 7 illustrates an uplink power control operation of a UE in a soft handover region;

FIG. 8 is a flowchart illustrating a method for setting a CSI transmission interval according to an embodiment of the present invention;

FIG. 9 illustrates the format of buffer status information and CSI transmitted from a UE according to an embodiment of the present invention;

FIG. 10 illustrates an embodiment of transmission of the buffer status information and CSI according to the present invention;

FIG. 11 illustrates another embodiment of transmission of the buffer status information and CSI according to the present invention;

FIG. 12 is a block diagram of an EUDCH transmission controller for transmitting the buffer status information and CSI according to an embodiment of the present invention;

FIG. 13 is a flowchart illustrating a method in a UE for transmitting the buffer status information and CSI according to an embodiment of the present invention;

FIG. 14 is a block diagram of an EUDCH receiver in a Node B for receiving the buffer status information and CSI according to an embodiment of the present invention;

FIG. 15 is a flowchart illustrating a method in the Node B for receiving the buffer status information and CSI according to the embodiment of the present invention;

FIG. 16 is a block diagram of an EU-SCHCCH receiver in the UE for receiving scheduling assignment information according to an embodiment of the present invention; and

FIG. 17 is a flowchart illustrating an operation in the UE for receiving the scheduling assignment information according to an embodiment of the present invention.

## DETAILED DESCRIPTION OF THE PREFERRED EMBODIMENTS

Preferred embodiments of the present invention will be described in detail herein below with reference to the accompanying drawings. In the following description, well-known functions or constructions are not described in detail because they would obscure the invention in unnecessary detail.

In accordance with the present invention, for a Node B to control scheduling of the EUDCH used for high-speed uplink packet data service, different transmission intervals are set for transmitting buffer status information and CSI from a UE. The UE transmits buffer status information and CSI to the Node B at the transmission intervals. An RNC (Radio Network Controller) that controls the radio resources of the Node B sets the transmission intervals of the buffer status information and CSI, taking into account a QoS (Quality of Service) requirement for the EUDCH service, the ROT of the uplink, and a handover situation or a normal situation of the UE.

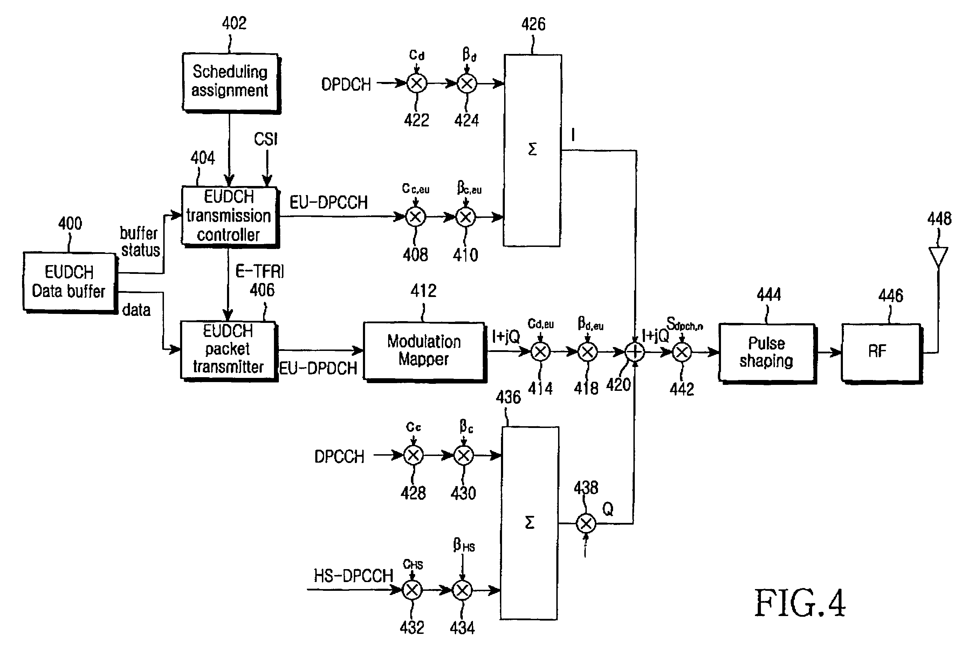

FIG. 4 is a block diagram of a transmitter in a UE supporting the EUDCH service. Uplink physical channels available to the UE are a DPDCH (Dedicated Physical Data Channel), an EU-DPDCH, which is a DPDCH used for the EUDCH service, a DPCCH (Dedicated Physical Control Channel), an HS-DPCCH (High Speed DPCCH) for HSDPA service, and an EU-DPCCH that is a DPCCH used for the EUDCH service.

The EU-DPCCH delivers the buffer status information and CSI of a UE. The CSI includes an uplink transmit power and an uplink transmit power margin required for a Node B to estimate the uplink channel state of the UE. Also, the EU-DPCCH delivers an E-TFRI (EUDCH-Transport Format and Resource Indicator) representing the transport format of the EU-DPDCH including the used data size, data rate, and modulation scheme. The EU-DPDCH conveys packet data at a data rate that is determined according to scheduling assignment information received from the Node B. While the DPDCH only supports BPSK (Binary Phase Shift Keying), the EU-DPDCH can support higher-order modulations such as QPSK (Quadrature Phase Shift Keying) and 8PSK (8-ary PSK) and BPSK, to increase data rate while maintaining the number of simultaneous spreading codes.

Referring to FIG. 4, an EUDCH transmission controller 404 monitors an EUDCH data buffer 400 having data to be transmitted on the EUDCH, and acquires buffer status information required for Node B control scheduling. Also, the EUDCH transmission controller 404 acquires CSI from an uplink transmission path (not shown). The EUDCH transmission controller 404 determines an E-TFRI representing the transport format of EUDCH packet data. The E-TFRI is determined according to a maximum data rate allowed by a scheduling assigner 402. The EUDCH transmission controller 404 generates EU-DPCCH data including the buffer status information, CSI, and E-TFRI, and outputs it to a spreader 408.

DPDCH data is spread at a chip rate with an OVSF (Orthogonal Variable Spreading Factor) code $c_d$ assigned to the DPDCH in a spreader 422, multiplied by a channel gain $\beta_d$ in a gain adjuster 424, and applied to the input of a summer 426. The EU-DPCCH data is spread at a chip rate with an OVSF code $c_{c,eu}$ assigned to the EU-DPCCH in the spreader 408, multiplied by a channel gain $\beta_{c,eu}$ in a gain adjuster 410, and applied to the input of the summer 426. The summer 426 sums the outputs of the gain adjusters 424 and 410, and transmits the sum to a summer 420, which assigns the sum to an I channel.

An EUDCH packet transmitter 406 reads as much packet data as indicated by the E-TFRI from the EUDCH data buffer 400 and encodes the packet data according to the E-TFRI, thereby producing EU-DPDCH data. A modulation mapper 412 modulates the EU-DPDCH data in BPSK, QPSK, or 8PSK, and outputs an EU-DPDCH modulation symbol sequence. BPSK modulation symbols have real number values, whereas QPSK or 8PSK modulation symbols have complex number values. It should be noted that the following description is made in the context of using QPSK or 8PSK for the EU-DPDCH.

The modulation mapper 412 converts the EU-DPDCH data to a complex symbol sequence. A spreader 414 spreads the modulation symbol sequence at a chip rate with an OVSF code $c_{d,eu}$ assigned to the EU-DPDCH. The spread EU-DPDCH signal is multiplied by a channel gain $\beta_{d,eu}$ in a gain adjuster 418 and applied to the input of the summer 420.

DPCCH data, which is control information of the DPDCH, is spread at a chip rate with an OVSF code $c_c$ assigned to the DPCCH in a spreader 428, multiplied by a channel gain $\beta_c$ in a gain adjuster 430, and applied to the input of a summer 436. HS-DPCCH data, which is control information for an HSDPA service, is spread at a chip rate with an OVSF code $c_{HS}$ assigned to the HS-DPCCH in a spreader 432, multiplied by a channel gain $\beta_{HS}$ in a gain adjuster 434, and applied to the input of the summer 436. The summer 436 sums the outputs of the gain adjusters 430 and 434, and transmits the sum to a phase adjuster 438, which assigns the sum to a Q channel.

The summer 420 sums the outputs of the summer 426, the gain adjuster 418, and the phase adjuster 438, and outputs the resulting complex symbol sequence to a scrambler 442. The scrambler 442 scrambles the complex symbol sequence with a scrambling code $S_{dpch,n}$. The scrambled complex symbol sequence is converted to pulse form in a pulse shaping filter 444 and transmitted to the Node B through an RF (Radio Frequency) processor 446 and an antenna 448.

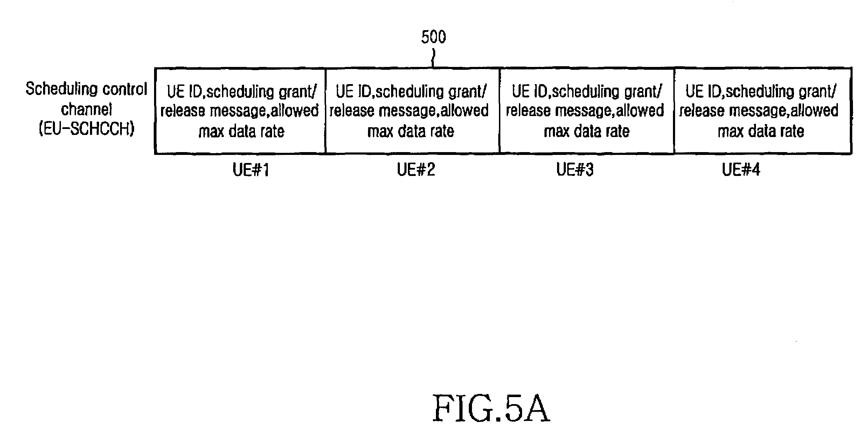

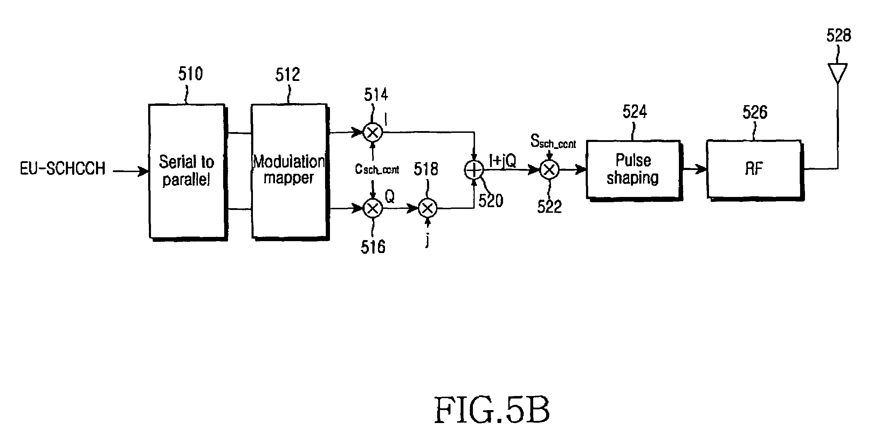

FIG. 5A illustrates a format of the EU-SCHCCH for delivering EUDCH scheduling assignment information, and FIG. 5B is a block diagram of an EU-SCHCCH transmitter. The EU-SCHCCH delivers scheduling assignment information 500 including Scheduling Grant/Release Messages and allowed maximum data rates to a plurality of UEs, using one OVSF code. A Scheduling Grant/Release Message indicates if the EUDCH packet data is transmitted. The scheduling assignment information 500 includes the IDs of the UEs for which the Scheduling Grant/Release Messages and the allowed maximum data rates are destined.

A serial-to-parallel converter 510 converts the EU-SCHCCH data containing the scheduling assignment information 500 to parallel symbol sequences in. A modulation mapper 512 converts the parallel symbol sequences to I and Q streams. Spreaders 514 and 516 spread the I and Q streams, respectively, with an OVSF code assigned to the EU-SHCCH, $c_{sch\_cont}$ at a chip rate. A phase adjuster 518 multiplies the Q stream received from the spreader 516 by a phase variation j. A summer 520 sums the outputs of the spreader 514 and the phase adjuster 518. A scrambler 522 scrambles the complex symbol sequence received from the summer 520 with a scrambling code $S_{sch,cont}$. The scrambled complex symbol sequence is converted to pulse form in a pulse shaping filter 524 and transmitted to the UEs through an RF processor 526 and an antenna 528.

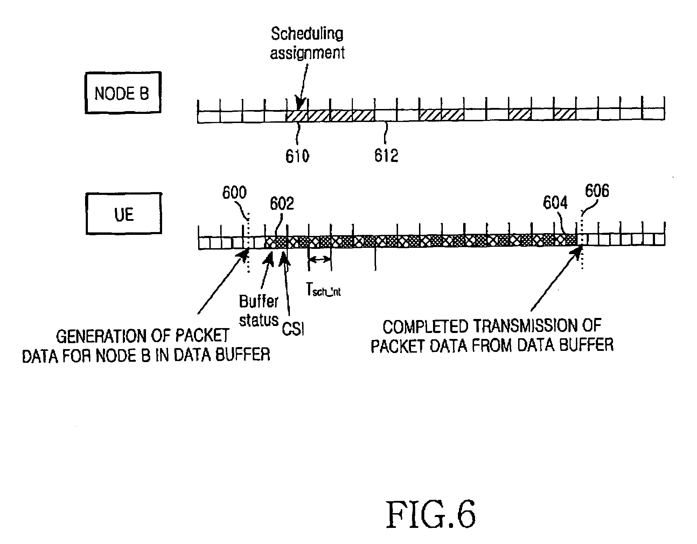

FIG. 6 illustrates a continuous transmission of buffer status information and CSI from a UE to a Node B, and transmission of scheduling assignment information from the Node B to the UE in a conventional EUDCH system. The UE transmits to the Node B the buffer status information and CSI at every predetermined interval (i.e., scheduling interval $T_{sch\_int}$) to receive the scheduling assignment information.

Referring to FIG. 6, packet data destined for the Node B is stored (generated) in the EUDCH data buffer of the UE at a time 600. For a time period 602, the UE transmits to the Node B buffer status information indicating the data amount of the data buffer and CSI, representing an uplink transmit power and a transmit power margin. The Node B determines a maximum data rate for the UE based on the buffer status information and CSI, and transmits the maximum data rate to the UE by scheduling assignment information for a time period 610.

When all the packet data stored in the EUDCH data buffer cannot be transmitted to the Node B at one time, the UE continuously transmits the buffer status information and CSI at the scheduling interval $T_{sch\_int}$ from the time period 602 through a time 606, in order to request scheduling assignment to the Node B. The packet data is completely transmitted to the Node B by the time 606. Therefore, after time 606, the UE discontinues transmission of the buffer status information and CSI. The Node B, although receiving the buffer status information and CSI from the UE, does not transmit the scheduling assignment information for a time period 612 if an ROT condition is not satisfied.

Therefore, the transmission of the buffer status information and CSI at every scheduling interval significantly increases uplink overhead and reduces uplink traffic capacity. Accordingly, in a preferred embodiment of the present invention, different transmission intervals are set for the buffer status information and the CSI. The reasons for setting the different transmission intervals will be described in more detail herein below.

First, from the perspective of uplink power control, transmission of the buffer status information and the CSI at different transmission intervals will be described.

The Node B continuously measures the strength of an uplink signal received from the UE and transmits a UL TPC (Uplink Transmit Power Control) command to the UE according to the measurement. If the TPC command indicates a power decrease, the UE decreases its uplink transmit power. If the TPC command indicates a power increase, the UE increases the uplink transmit power. Therefore, for a non-CSI reception period, the Node B can estimate the transmit power of the UE by Equation (2),

$$Transmit\_power\_est = CSI\_prev + power\_control\_step\_size$$

$$\times \ (up\_count - down\_count) \tag{2}$$

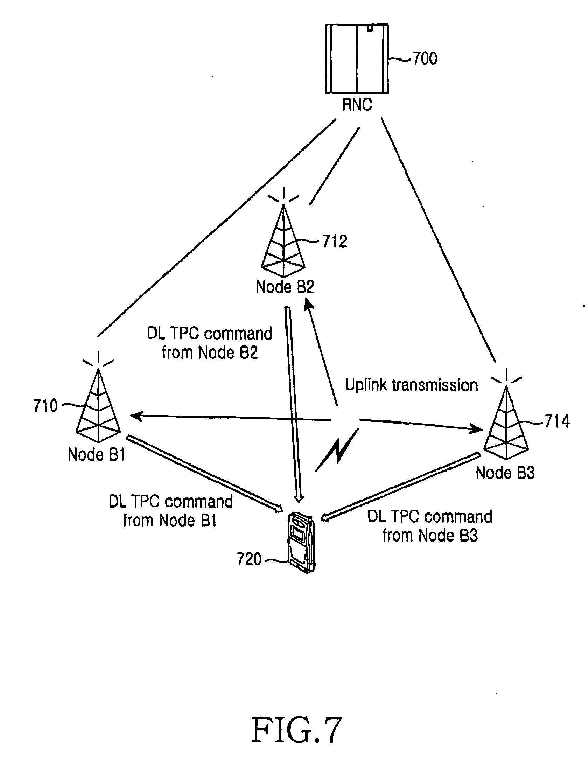

where Transmit_power_est is an estimate of the transmit power of the UE, CSI_prev is previously received information about the UE's transmit power, up_count is the number of power increase commands after receiving CSI_prev, and down_count is the number of power decrease commands after receiving CSI_prev. power_control_step_size is an increment/decrement unit of the transmit power in relation to a power increase/decrease command. As noted from Equation (2), the Node B estimates the current transmit power of the UE using the previous transmit power of the UE and the TPC commands transmitted by the Node B. However, when the UE is located in a soft handover region, Equation (2) is not valid. This will be described in more detail with reference to FIG. 7.

FIG. 7 illustrates an uplink power control operation of a UE in a soft handover region. Referring to FIG. 7, a UE 720 is located in a soft handover region and transmits data to at least two active Node Bs (three active Node Bs 710, 712, and 714, herein). The active Node Bs 710, 712, and 714 demodulate the received data and transmit the demodulated data to an RNC 700. This scheme enables an active Node B that demodulates the data without errors among the Node Bs 710, 712, and 714 to transmit the demodulated data to the RNC 700, thereby achieving a macro selection diversity gain.

The UE 720 receives three downlink TPC commands from the active Node Bs 710, 712, and 714. If at least one of the TPC commands indicates a power decrease, the UE 720 decreases its transmit power. If all of the TPC commands indicate a power increase, the UE 720 increases the transmit power.

However, because each active Node B has no knowledge of TPC commands from the other active Node Bs, the transmit power of the UE 720 estimated by the active Node B using Equation (2) is different from the actual transmit power of the UE 720. Therefore, the UE 720 must have a shorter CSI transmission interval in order for the active Node Bs 710, 712, and 714 to accurately detect the transmit power of the UE 720 in the soft handover region.

When the UE does not report its buffer status, the Node B estimates the current buffer status of the UE utilizing the previous reported buffer status by Equation (3),

$$Buffer\_state\_est = Buffer\_state\_prev - Data\_sent \tag{3}$$

where Buffer_state_est is an estimate of the current buffer status, Buffer_state_prev is the previous received buffer status value, and Data_sent is the amount of data received from the UE after receiving Buffer_state_prev, acquired using an E-TFRI received from the UE. Because the E-TFRI represents the data size, coding rate, and modulation scheme of EU-DPDCH data, the Node B can determine the amount of data received from the UE by the data size. The E-TFRI is typically set to have a lower error rate than the TPC command in order to improve the reception performance of the packet data. Therefore, the estimate of the buffer status is relatively reliable compared to the transmit power estimate. Accordingly, the transmission interval of the buffer status information is longer than the CSI transmission interval.

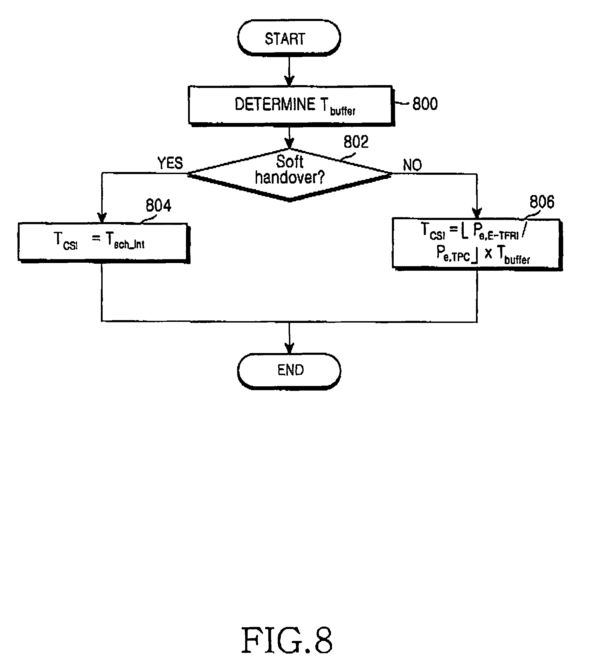

FIG. 8 is a flowchart illustrating a method for setting the transmission intervals of buffer status information and CSI in an RNC according to an embodiment of the present invention. Referring to FIG. 8, the RNC determines a buffer status transmission interval $T_{buffer}$ for a UE requesting an EUDCH service, considering an ROT condition and a QoS requirement for the EUDCH service in step 800. The ROT condition is a condition that a measured ROT should not exceed a target ROT. In step 802, the RNC determines if the UE is in a handover region. If the UE is in the handover region, the RNC proceeds to step 804. If the UE is not in the handover region, the RNC proceeds to step 806.

In step 804, the RNC sets a CSI transmission interval $T_{CSI}$ for the UE to be equal to $T_{sch,int}$. In step 806, the RNC calculates $T_{CSI}$ by Equation (4),

$$T_{CSI} = {}_{\llcorner} (P_{e,E\text{-}TFRI} / P_{e,TPC}) \times T_{buffer \lrcorner} \tag{4}$$

where $_{\llcorner} A_{\lrcorner}$ is a function of obtaining a maximum integer equal to or less than A, $P_{e,E\text{-}TFRI}$ is a reception error rate requirement for the E-TFRI, and $P_{e,TPC}$ is a reception error rate requirement for a TPC command transmitted to the UE. As noted from Equation (4), $T_{CSI}$ is set to be shorter than $T_{buffer}$ according to the reception error rates of the E-TFRI and the TPC command. The RNC transmits $T_{buffer}$ and $T_{CSI}$ to the UE by an RRC (Radio Resource Control) signaling message and to the Node B by an NBAP (Node B Application Part) signaling message.

In the above-described case, $T_{buffer}$ is longer than $T_{CSI}$. However, considering the fact that a fading-caused temporary channel change is overcome to a considerable extent through power control in CDMA systems, the Node B control scheduling can be performed by taking into account long-term fading such as topographical features-incurred shadowing, that is, an average channel change over a long term. In this case, the average channel state over a long term is reflected in the CSI. As a result, $T_{CSI}$ can be set to be longer than $T_{buffer}$.

When $T_{CSI}$ is shorter than $T_{buffer}$ and $T_{CSI}$ is longer than $T_{buffer}$ have been described above. However, the present invention is not limited to those cases and it is to be appreciated that the $T_{CSI}$ is different from $T_{buffer}$ under certain circumstances.

An operation and a system structure for transmitting buffer status information and CSI at the different transmission intervals, when $T_{CSI}$ and $T_{buffer}$ are set to be different, will now be detailed below.

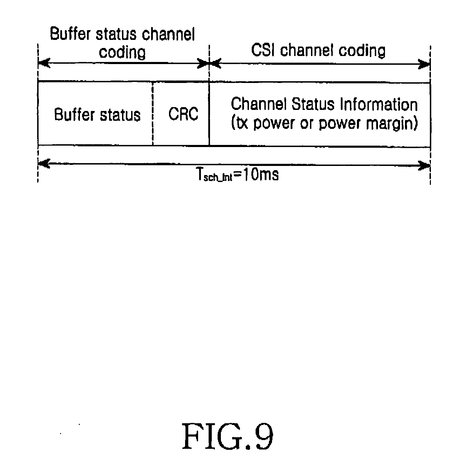

FIG. 9 illustrates a format of buffer status information and CSI transmitted from a UE according to an embodiment of the present invention. Referring to FIG. 9, the buffer status information and CSI are transmitted in one scheduling interval. The scheduling interval is 10ms in duration. To set different transmission intervals for the buffer status information and the CSI, the UE channel-encodes the buffer status information and the CSI through different coding chains. That is, the buffer status information is attached with CRC (Cyclic Redundancy Check) bits and then channel-encoded, whereas the CSI is directly channel-encoded without attachment of CRC bits. The Node B determines that the buffer status information has been received by a CRC check. Because the CSI follows the buffer status information, a decision as to whether or not the CSI has been received depends on whether or not the buffer status information has been received.

In accordance with an embodiment of the present invention, the UE preferably operates as follows:

(1) If an amount of packet data stored in an EUDCH data buffer is equal to or greater than a predetermined scheduling threshold, a UE starts to transmit buffer status information and CSI to a Node B;

(2) The UE repeatedly transmits buffer status information and a CSI at every predetermined transmission interval of which an RNC has notified a UE. As described above, the buffer status information and the CSI are transmitted at different intervals; and

(3) If an amount of packet data stored in the EUDCH data buffer is reduced below the threshold, the UE discontinues transmission of the buffer status information and the CSI. Also, when receiving from the Node B a Scheduling Release message indicating termination of the Node B control scheduling, the UE discontinues transmission of the buffer status information and the CSI.

The Node B operates as follows:

(1) The Node B continuously CRC-checks the EU-DPCCH to determine whether buffer status information has been received from the UE. Upon detecting the buffer status information in a scheduling interval, the Node B receives the CSI following the buffer status information in the same scheduling interval;

(2) Once the Node B has initially received the buffer status information and the CSI, it repeatedly receives them in scheduling intervals determined according to the predetermined reception intervals that the RNC told the Node B. As described above, the Node B receives the buffer status information and the CSI at different reception intervals. The Node B then generates scheduling assignment information based on the buffer status information and the CSI;

(3) The Node B estimates the amount of packet data stored in the EUDCH data buffer of the UE by Equation (3), and if the estimate is less than the predetermined threshold, discontinues reception of the buffer status and the CSI, and

(4) In another case, in order to command the UE to discontinue transmission of the buffer status information and the CSI, the Node B transmits the Scheduling Release message to the UE.

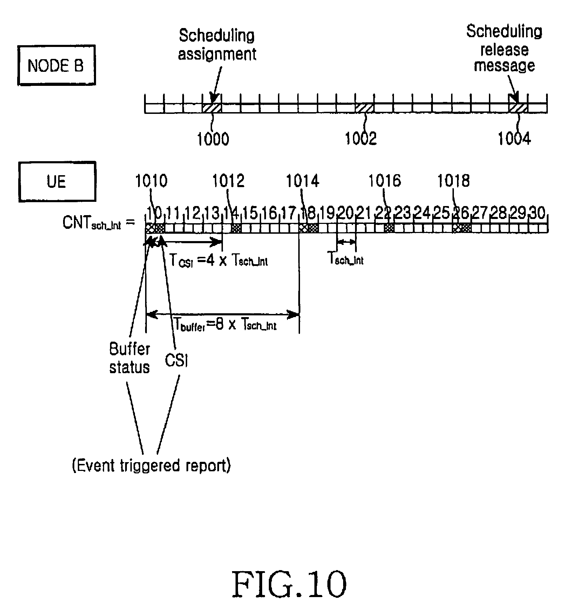

FIG. 10 illustrates an embodiment of EU-DPCCH signaling for scheduling assignment between the UE and the Node B according to the present invention. $CNT_{sch\_int}$ denotes an index of a scheduling interval. Each scheduling interval is divided into a buffer status information part and a CSI part.

In a scheduling interval 1010 with $CNT_{sch\_int}$=10, the UE initially transmits buffer status information and CSI to the Node B, when determining that the amount of packet data stored in the EUDCH data buffer is equal to or greater than a scheduling threshold. The UE periodically transmits the buffer status information and the CSI at their respective transmission intervals. The transmission interval of the buffer status information is eight times the scheduling interval $T_{sch\_int}$. Therefore, the buffer status information is transmitted in scheduling intervals 1010, 1014, and 1018 with $CNT_{sch\_int}$=10, 18, and 26. The transmission interval of the CSI is four times the scheduling interval $T_{sch\_int}$. Therefore, the CSI is transmitted in scheduling intervals 1010, 1012, 1014, 1016, and 1018 with $CNT_{sch\_int}$=10, 14, 18, 22, and 26.

After initially receiving the buffer status information and the CSI, the Node B receives them periodically at the reception intervals of which the RNC has notified the Node B. In time periods 1000 and 1002, the Node B determines scheduling assignment information based on the last buffer status information and CSI and the current ROT, and transmits it to the UE.

The Node B estimates the amount of data stored in the EUDCH data buffer of the UE using Equation (3) and, if determining that the UE has completely transmitted the packet data from the EUDCH data buffer, discontinues transmission of the scheduling assignment information to the UE. The Node B can transmit a Scheduling Release message to the UE in a time period 1004, notifying termination of transmission of the scheduling assignment information to the UE. Upon receiving the Scheduling Release message, the UE terminates transmission of the buffer status information and the CSI. To determine if new buffer status information has been received from the UE after the termination of the scheduling, the Node B continuously CRC-checks the EU-DPCCH in each scheduling interval. When the Node B does not use a Scheduling Grant message, the UE discontinues the transmission of the buffer status information, and the CSI when the amount of the packet data stored in the EUDCH data buffer is less than the threshold.

As illustrated in FIG. 10, the periodic transmission of the buffer status information and CSI starts from the first transmission of the buffer status information. It can be further contemplated as another embodiment of the present invention that the transmission time points of the buffer status information and CSI are determined irrespective of the first transmission time point of the buffer status information. The transmission time points of the buffer status information and CSI are calculated by Equation (5) and Equation (6), respectively,

$$(CNT_{sch\_int} - offset\_buffer)mod(T\_buffer/T_{sch\_int}) = 0 \qquad (5)$$

$$(CNT_{sch\_int} - offset\_CSI)mod(T\_CSI/T_{sch\_int}) = 0 \qquad (6)$$

where mod is an operator that computes the remainder of the division between two operands, $CNT_{sch\_int}$ is a scheduling interval index, and offset_buffer is an integer specific to each UE to prevent a plurality of UEs from providing the EUDCH service from transmitting buffer status information at the same time, thereby increasing the measured ROT of the Node B. Each UE transmits the buffer status information to the Node B in scheduling intervals satisfying Equation (5) according to its offset_buffer. Similarly, offset_CSI is an integer specific to each UE to prevent the UEs from transmitting CSIs at the same time, thus increasing the measured ROT of the Node B. Each UE transmits the CSI to the Node B in scheduling intervals satisfying Equation (6) according to its offset_CSI. Additionally, offset_buffer and offset_CSI can be identical or different.

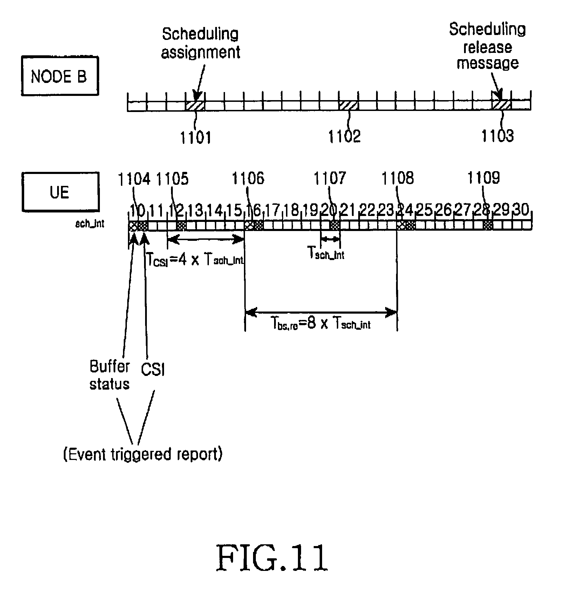

FIG. 11 illustrates another embodiment of transmission of the buffer status information and CSI according to the present invention. Referring to FIG. 11, the UE has offset_buffer set to 0 and offset_CSI set to 0. $T_{buffer}$ is eight times $T_{sch\_int}$, and $T_{CSI}$ is four times $T_{sch\_int}$. According to Equation (5), the buffer status information is transmitted in scheduling intervals 1106 and 1108 with $CNT_{sch\_INT}$=16 and 24. According to Equation (6), the CSI is transmitted in scheduling intervals 1105, 1106, 1107, 1108, and 1109 with $CNT_{sch\_INT}$=12, 16, 20, 24, and 28. After initially transmitting the buffer status information and the CSI in a scheduling interval 1104, the UE transmits the CSI in the scheduling intervals 1105, 1106, 1107, 1108, and 1109 and the buffer status information in the scheduling intervals 1106 and 1108.

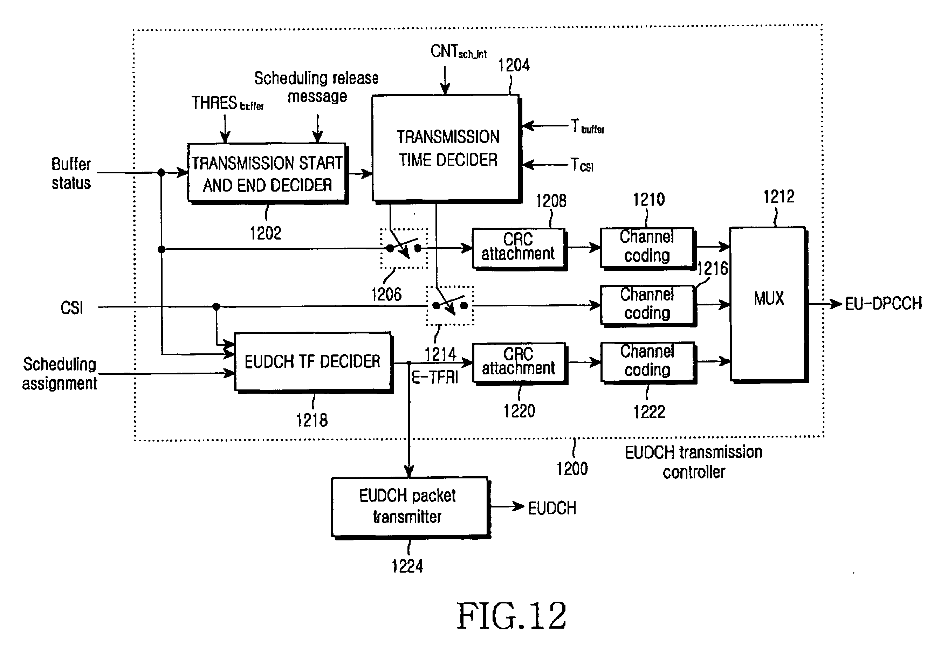

FIG. 12 is a block diagram of an EUDCH transmission controller 1200 according to an embodiment of the present invention. Referring to FIG. 12, a transmission start and end decider 1202 determines the start and end of transmission of buffer status information and CSI. The transmission start is determined by comparing input buffer status information with a predetermined threshold. If the buffer status information indicating the amount of packet data stored in the EUDCH data buffer is equal to or greater than the threshold, the transmission start and end decider 1202 outputs a start signal, considering that it is time to start to transmit the buffer status information and the CSI. The end is a time point when a Scheduling Release message is received from the Node B. Alternatively, when the buffer status information is less than the threshold, the transmission start and end decider 1202 outputs an end signal, considering that it is time to terminate the transmission of the buffer status information and the CSI.

A transmission time decider 1204, upon receiving the start signal from the transmission start and end decider 102, determines the transmission time points of the buffer status information and CSI. The transmission time points are represented by $CNT_{sch\_int}$ as illustrated in FIGs. 10 and 11. The RNC notifies the transmission time decider 1204 of $T_{buffer}$ and $T_{CSI}$ by upper layer signaling. When the transmission time points of the buffer status information are determined, the transmission time decider 1204 activates a buffer status switch 1206 in the scheduling intervals corresponding to the determined transmission time points. When the transmission time points of the CSI are determined, the transmission time decider 1204 activates a CSI switch 1214 in the scheduling intervals corresponding to the determined transmission time points.

The buffer status switch 1206 switches the buffer status information to a CRC adder 1208. The buffer status information is attached with CRC bits in the CRC adder 1208 and channel-encoded in a channel encoder 1210. The channel-coded buffer status information is applied to the input of a multiplexer (MUX) 1212. The CSI switch 1214 switches the CSI to a channel encoder 1216. The CSI is channel-encoded in the channel encoder 1216 and input to the MUX 1212. An EUDCH TF (Transport Format) decider 1218 determines the transport format of packet data for the EUDCH service based on scheduling assignment information received from the Node B and generates an E-TFRI representing the decided transport format. The E-TFRI is added with CRC bits in a CRC adder 1220 and channel-encoded in a channel encoder 1222. The channel-coded E-TFRI is input to the MUX 1212. The MUX 1212 multiplexes the coded buffer status information, CSI, and E-TFRI, and transmits the multiplexed signal on the EU-DPCCH.

An EUDCH packet transmitter 1224 transmits the packet data stored in the EUDCH data buffer using the transport format determined by the EUDCH TF decider 1218.

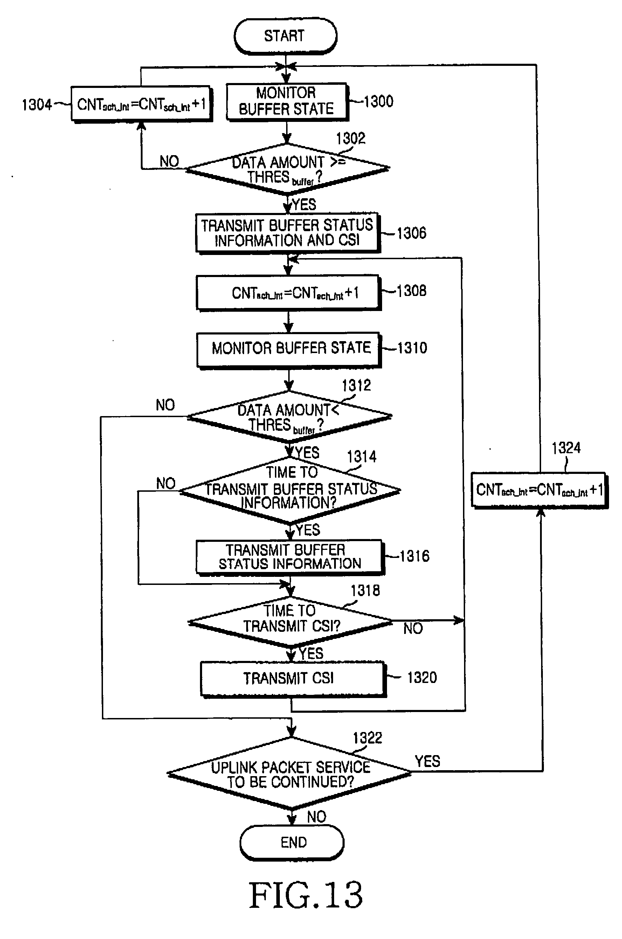

FIG. 13 is a flowchart illustrating an operation of a UE transmitter according to an embodiment of the present invention. Referring to FIG. 13, the UE monitors its buffer status, that is, the amount of data stored in the EUDCH data buffer in step 1300 and determines whether the data amount is equal to or greater than the threshold $THRES_{buffer}$ in step 1302. If the data amount is equal to or greater than $THRES_{buffer}$, the UE proceeds to step 1306. If the data amount is less than $THRES_{buffer}$, the UE proceeds to step 1304. In step 1304, the UE waits until a next scheduling interval, and returns to step 1300 to monitor the EUDCH data buffer.

In step 1306, the UE transmits buffer status information and CSI to the Node B. It waits until the next scheduling interval in step 1308 and monitors the EUDCH data buffer in step 1310. In step 1312, the UE determines whether to continue transmitting the buffer status information and CSI. The determination is made by comparing the amount of packet data stored in the EUDCH data buffer with $THRES_{buffer}$. If the data amount is still equal to or greater than $THRES_{buffer}$, the UE proceeds to step 1314 to continue transmitting the buffer status information and the CSI. If the data amount is less than $THRES_{buffer}$, the UE proceeds to step 1322. In step 1322, the UE determines whether to continue the EUDCH data service. If the UE determines to continue the EUDCH data service, it waits until the next scheduling interval in step 1324. However, if the UE determines not to continue the EUDCH data service, it terminates the procedure.

In step 1314, the UE determines whether it is time to transmit the buffer status information by comparing the index of the current scheduling interval with the transmission time points of the buffer status information. The transmission time points are determined according to the transmission interval of the buffer status information, which the RNC notified the UE of. If it is time to transmit the buffer status information, the UE proceeds to step 1316. Otherwise, the UE proceeds to step 1318. The UE transmits the buffer status information in step 1316 and proceeds to step 1318.

In step 1318, the UE determines whether it is time to transmit the CSI by comparing the index of the current scheduling interval with the transmission time points of the CSI. The transmission time points are determined according to the transmission interval of the CSI which the RNC notified the UE of. If the current scheduling index is identical to a transmission time point of the CSI, the UE proceeds to step 1320. However, if the current scheduling index is not identical to a transmission time point of the CSI, the UE returns to step 1308. The UE transmits the CSI in step 1320 and returns to step 1308.

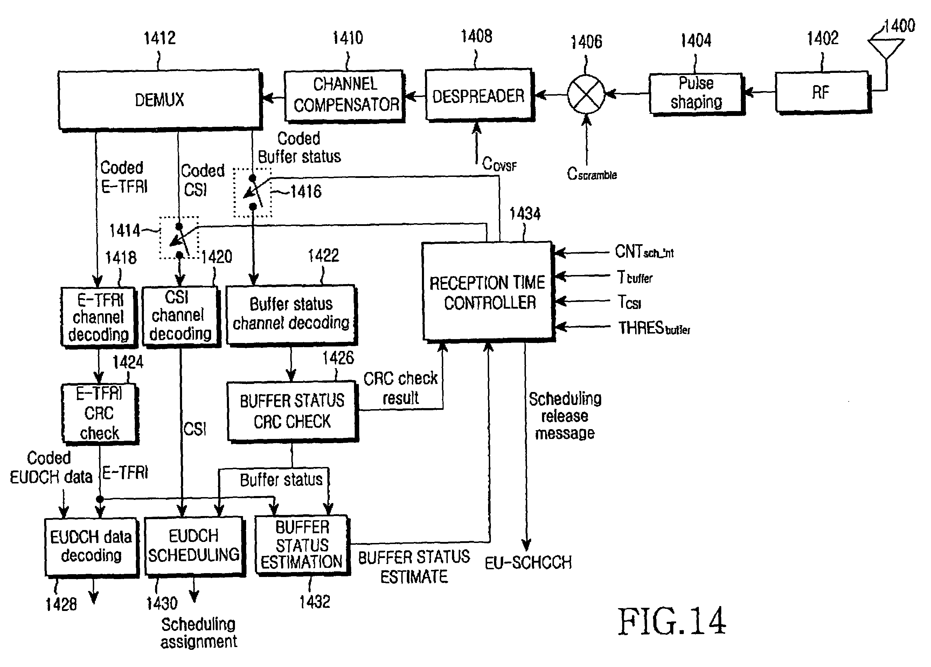

FIG. 14 is a block diagram of a Node B receiver according to an embodiment of the present invention. Referring to FIG. 14, an antenna 1400 receives an RF signal from the UE. An RF processor 1402 downconverts the RF signal to a baseband signal. A pulse shaping filter 1404 converts the baseband signal to a digital signal. A descrambler 1406 descrambles the digital signal with the scrambling code $C_{scramble}$. The descrambled signal is multiplied by the OVSF code $C_{OVSF}$ in a despreader 1408 and transmitted to a demultiplexer (DEMUX) 1412 through a channel compensator 1410. The DEMUX 1412 demultiplexes a signal received from the channel compensator 1410 into coded buffer status information, CSI, and E-TFRI. Because a CSI switch 1414 and a buffer status switch 1416 are activated at a first time, they switch the buffer status information and the CSI to a buffer status channel decoder 1422 and a CSI channel decoder 1420, respectively.

The buffer status channel decoder 1422 decodes the coded buffer status information. A buffer status CRC checker 1426 checks a CRC of the decoded buffer status information and provides a CRC check result to a reception time controller 1434. The reception time controller 1434 determines if the buffer status information has been received from the UE. If the CRC check result is good, which implies that the buffer status information has been received from the UE, the reception time controller 1434 determines that it is the first reception time and determines the reception time points of the buffer status information and the CSI using $CNT_{sch\_int}$, $T_{buffer}$, $T_{CSI}$, and $THRES_{buffer}$. The reception time controller 1434 activates the buffer status switch 1416 and the CSI switch 1414, respectively, at the determined reception time points.

The CSI channel decoder 1420 channel-decodes the coded CSI. An EUDCH scheduler 1430 generates scheduling assignment information using the CSI received from the CSI channel decoder 1420 and the buffer status information received from the buffer status CRC checker 1426. The scheduling assignment information is transmitted to the UE on the EU-SCHCCH. An E-TFRI channel decoder 1418 channel-decodes the coded E-TFRI received from the DEMUX 1412. An E-TFRI CRC checker 1424 checks a CRC of the E-TFRI. If the CRC check result is good, the E-TFRI is provided to an EUDCH data decoder 1428. The EUDCH data decoder 1428 decodes EUDCH data received on the EU-DPDCH from the UE using the E-TFRI.

A buffer status estimator 1432 estimates the buffer status of the UE using the buffer status information and the E-TFRI. If the buffer status estimate is less than $THRES_{buffer}$, the reception time controller 1434 concludes that it is time to terminate the reception of the buffer status information and the CSI, and controls an EU-SCHCCH transmitter (not shown) to transmit a Scheduling Release message to the UE.

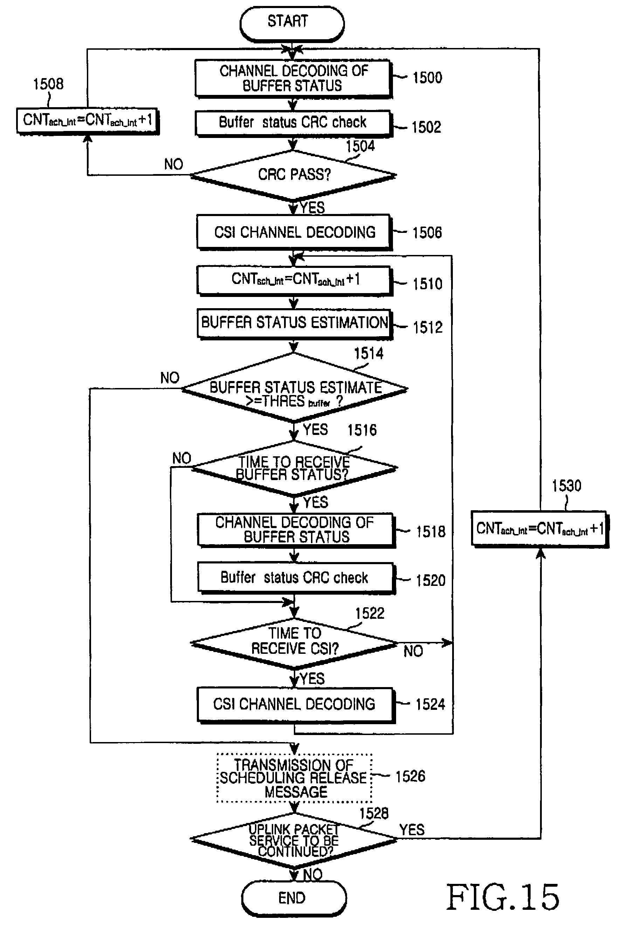

FIG. 15 is a flowchart illustrating a method for receiving buffer status information and CSI in the Node B according to an embodiment of the present invention. Referring to FIG. 15, the Node B channel-decodes coded buffer status information received from the UE in step 1500 and CRC-checks the decoded buffer status information in step 1502. Using the CRC check result, the Node B determines if the buffer status information has been received from the UE in step 1504. If the CRC check is passed, the buffer status information is provided to the EUDCH scheduler and the Node B goes to step 1506. If the CRC check is failed, the Node B waits until the next scheduling interval in step 1508 and returns to step 1500.

In step 1506, the Node B channel-decodes coded CSI following the buffer status information and provides the decoded CSI to the EUDCH scheduler. In step 1510, the Node B waits until the next scheduling interval. The Node B estimates the buffer status of the UE using the last received buffer status information and the amount of received data in step 1512. An E-TFRI is known from the received data amount and the buffer status is estimated by subtracting the received data amount from the last received buffer status information.

In step 1514, the Node B determines if the buffer status estimate is equal to or greater than $THRES_{buffer}$. If the buffer status estimate is equal to or greater than $THRES_{buffer}$, the Node B proceeds to step 1516. However, if the buffer status estimate is less than $THRES_{buffer}$, the Node B transmits a Scheduling Release message to the UE in step 1526, and proceeds to step 1528. Step 1526 is marked with a dotted line to indicate that it is optional. Without step 1526, the procedure proceeds directly from step 1514 to step 1528. In step 1528, the Node B determines whether to continue the EUDCH data service. If the Node B determines to continue the EUDCH data service, it waits until the next scheduling interval in step 1530 and returns to step 1500. However, if the Node B determines not to continue the EUDCH data service, the procedure is terminated.

In step 1516, the Node B determines if the current scheduling interval is a reception time of the buffer status information. If it is, the Node B proceeds to step 1518. If it is not, the Node B proceeds to step 1522. The Node B receives the buffer status information in the current scheduling interval and decodes it in step 1518, and CRC-checks the decoded buffer status information in step 1520. If the CRC check is passed, the buffer status information is provided to the EUDCH scheduler.

In step 1522, the Node B determines if the current scheduling interval is a reception time of the CSI. If the current scheduling interval is a reception time of the CSI, the Node B receives the CSI in the current scheduling interval and decodes it in step 1524. If the current scheduling interval is not a reception time of the CSI, the Node B returns to step 1510.

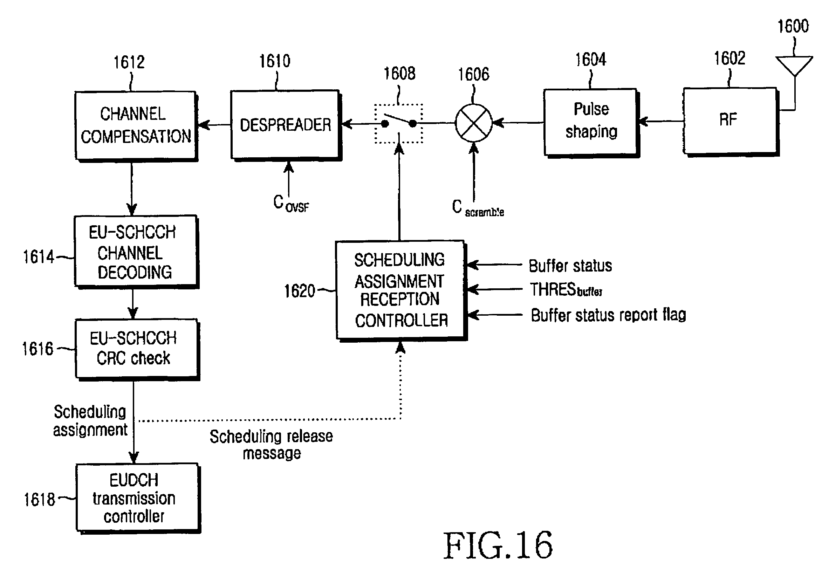

FIG. 16 is a block diagram of an EU-SCHCCH receiver in the UE, for receiving scheduling assignment information from the Node B according to an embodiment of the present invention. Referring to FIG. 16, an antenna 1600 receives an RF signal containing scheduling assignment information from the UE. An RF processor 1602 downconverts the RF signal to a baseband signal. A pulse shaping filter 1604 converts the baseband signal to a digital signal. A descrambler 1606 descrambles the digital signal with the scrambling code $C_{scramble}$. The descrambled signal is provided to an EU-SCHCCH channel decoder 1614 via a switch 1608, a despreader 1610, and a channel compensator 1612. The operation of the switch 1608 will be described later in more detail.

The EU-SCHCCH channel decoder 1614 channel-decodes a signal received from the channel compensator 1612. An EU-SCHCCH CRC checker 1616 CRC-checks the decoded EU-SCHCCH data to determine if the scheduling assignment information has been received from the Node B. If the CRC check is passed, the EU-SCHCCH CRC checker 1616 concludes that the decoded EU-SCHCCH data includes the scheduling assignment information, detects the scheduling assignment information, and provides it to a scheduling assignment reception controller 1620. If the scheduling assignment information includes a Scheduling Release message, the EU-SCHCCH CRC checker 1616 detects the Scheduling Release message and provides it to the scheduling assignment reception controller 1620.

The scheduling assignment reception controller 1620 receives buffer status information about the EUDCH data buffer, $THRES_{buffer}$, and a buffer status report flag. The buffer status report flag is activated when the UE transmits the first buffer status information to the Node B. Upon recognition from the buffer status report flag that the first buffer status information has been transmitted to the Node B, the scheduling assignment reception controller 1620 activates the switch 1608 and receives the scheduling assignment information from the Node B. The scheduling assignment reception controller 1620 controls the switch 1608 using the buffer status information and $THRES_{buffer}$. If the buffer status information is equal to or greater than $THRES_{buffer}$, the switch 1608 is activated and receives the scheduling assignment information. If the buffer status information is less than $THRES_{buffer}$, the switch 1608 is deactivated. Additionally, upon receiving the Scheduling Release message from the EU-SCHCCH CRC checker 1616, the scheduling assignment reception controller 1620 deactivates the switch 1608.

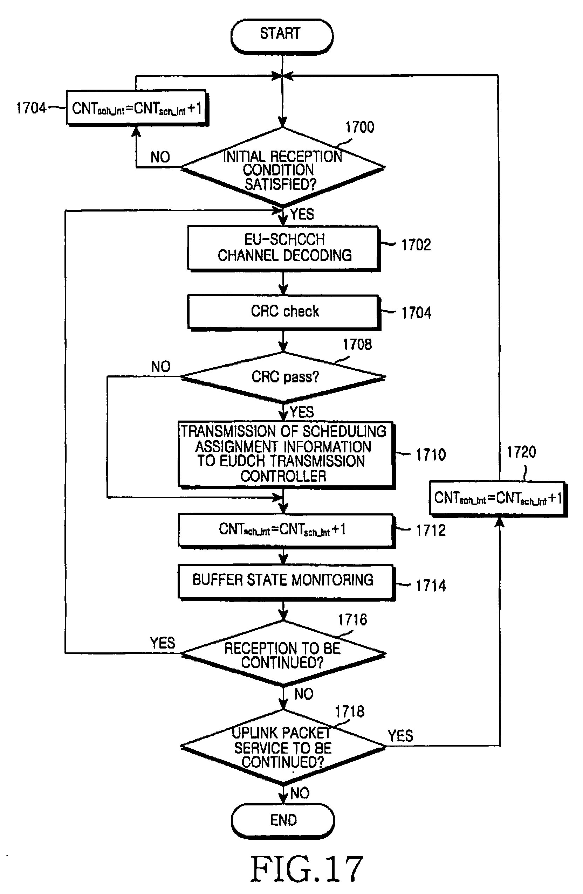

FIG. 17 is a flowchart illustrating a method of the EU-SCHCCH receiver in the UE according to an embodiment of the present invention. Referring to FIG. 17, the UE determines if a condition of initially receiving scheduling assignment information has been satisfied in step 1700. The initial reception condition is satisfied when the buffer status report flag is activated. If the buffer status report flag is activated, the UE proceeds to step 1702. However, if the initial reception condition is not satisfied, the UE waits until the next scheduling interval in step 1704.

The UE channel-decodes received EU-SCHCCH data in step 1702 and CRC-checks the decoded EU-SCHCCH data in step 1704. If the UE determines by the CRC check that the decoded data is scheduling assignment information in step 1708, it proceeds to step 1710. However, if the decoded data is not scheduling assignment information, i.e., the CRC check does not pass, the UE proceeds to step 1712. The UE provides the scheduling assignment information to the EUDCH transmission controller in step 1719, waits until the next scheduling interval in step 1712, and proceeds to step 1714.

In step 1714, the UE monitors the state of the EUDCH data buffer by comparing the amount of packet data stored in the EUDCH data buffer with $THRES_{buffer}$. According to the comparison result, the UE determines whether to continue receiving the scheduling assignment information in step 1716. Also, the UE makes the determination by checking whether the scheduling assignment information includes a Scheduling Release message. If the amount of the packet data is equal to or greater than $THRES_{buffer}$, or the Scheduling Release message has not been received, the UE returns to step 1702 to continue receiving the scheduling assignment information. However, if the packet data amount is less than $THRES_{buffer}$ or the Scheduling Release message has been received, the UE determines whether to continue the EUDCH data service in step 1718. If the UE determines to continue the EUDCH data service, it waits until the next scheduling interval in step 1720 and returns to step 1700. If the UE determines to terminate the EUDCH data service, it ends the procedure.

In accordance with the present invention as described above, if the amount of data queued in a data buffer is equal to or greater than a predetermined threshold, a UE transmits buffer status information and CSI required for Node B control scheduling at different intervals. The resulting decrease of signaling overhead in transmitting uplink packet data leads to efficient use of radio resources for an EUDCH mobile communication system.

While the present invention has been shown and described with reference to certain preferred embodiments thereof, it will be understood by those skilled in the art that various changes in form and details may be made therein without departing from the spirit and scope of the present invention as defmed by the appended claims.

**Claims**

1. A method in a user equipment (UE) for transmitting buffer state information and channel state information (CSI) for scheduling an uplink packet data service in a mobile communication system supporting the uplink packet data service, the buffer state information indicating a state of a data buffer for storing packet data to be transmitted from the UE and the CSI indicating an uplink transmit power of the UE, the method comprising the steps of:

   acquiring different transmission intervals of the buffer state information and the CSI;
   initially transmitting the buffer state information and the CSI, if an amount of packet data stored in the data buffer is at least equal to a predetermined threshold; and
   periodically transmitting the buffer state information and the CSI at the different transmission intervals.

2. The method of claim 1, further comprising the step of attaching the buffer state information to a cyclic redundancy code (CRC) for transmission error detection, before the initially transmitting and the periodically transmitting steps.

3. The method of claim 1, wherein the buffer state information and the CSI are initially transmitted and periodically transmitted in assigned areas of a predetermined scheduling interval, and the transmission intervals of the buffer state information and the CSI are integer multiples of a duration of the predetermined scheduling interval.

4. The method of claim 3, wherein the buffer state information and the CSI are periodically transmitted in the assigned areas of scheduling intervals from an initial transmission time, by integer multiples of the predetermined transmission intervals.

5. The method of claim 3, wherein the buffer state information and the CSI are periodically transmitted in the assigned areas of scheduling intervals from predetermined reference scheduling intervals for the buffer state information and the CSI, after an initial transmission time, by integer multiples of the predetermined transmission intervals.

6. The method of claim 5, wherein each of the reference scheduling intervals is determined by

$$(CNT_{sch\_int} - offset)mod(T/T_{sch\_int}) = 0$$

where $CNT_{sch\_int}$ is an index of the reference scheduling interval, offset is an integer as different as possible for each UE, mod is an operator that computes a remainder of a division between two operands, T is a transmission interval of the buffer state information or the CSI, and $T_{sch\_int}$ is a duration of the scheduling interval.

7. The method of claim 1, further comprising the step of discontinuing the periodic transmission of the buffer state information and the CSI, if the amount of the packet data stored in the data buffer is less than the predetermined threshold.

8. The method of claim 1, further comprising the step of discontinuing the periodic transmission of the buffer state information and the CSI, upon receiving a scheduling release message requesting termination of the transmission of the buffer state information and the CSI.

9. The method of claim 1, wherein a transmission interval of the buffer state information is longer than a CSI transmission interval.

10. The method of claim 1, wherein when the UE communicates with at least two Node Bs in a soft handover, a transmission interval of the buffer state information is longer than a CSI transmission interval.

11. The method of claim 1, wherein a transmission interval of the buffer state information is shorter than a CSI transmission interval.

12. The method of claim 1, wherein when the CSI reflects an uplink channel state change over a term that is long enough to overcome long-term fading, a transmission interval of the buffer state information is shorter than a CSI transmission interval.

13. The method of claim 1, wherein the different transmission intervals of the buffer state information and the CSI are determined according to a quality of service (QoS) requirement for the uplink packet data service and radio resources available to receive the uplink packet data service.

14. A method in a Node B for receiving buffer state information and channel state information (CSI) from a user equipment (UE) for scheduling an uplink packet data service in a mobile communication system supporting the uplink packet data service, comprising the steps of:

acquiring different reception intervals of the buffer state information and the CSI;
determining if the buffer state information and the CSI have been initially received; and
periodically receiving the buffer state information and the CSI at the different reception intervals, if the buffer state information and the CSI have been initially received.

15. The method of claim 14, wherein the step of determining if the buffer state information and the CSI have been initially received, comprises the steps of:

acquiring received data including the buffer state information and a cyclic redundancy code (CRC) of the received data for transmission error detection; and

receiving the buffer state information and the CSI, if the received data has no error by a CRC check.

16. The method of claim 14, wherein the buffer state information and the CSI are initially and periodically received in assigned areas of a predetermined scheduling interval, and the different reception intervals of the buffer state information and the CSI are integer multiples of a duration of the predetermined scheduling interval.

17. The method of claim 16, the buffer state information and the CSI are periodically received in the assigned areas of scheduling intervals from an initial reception time, by integer multiples of the different reception intervals.

18. The method of claim 16, wherein the buffer state information and the CSI are periodically received in the assigned areas of scheduling intervals from predetermined reference scheduling intervals for the buffer state information and the CSI, after an initial reception time, by integer multiples of the different reception intervals.

19. The method of claim 18, wherein each of the reference scheduling intervals is determined by

$$(CNT_{sch\_int} - offset) mod(T/T_{sch\_int}) = 0$$

where $CNT_{sch\_int}$ is an index of the reference scheduling interval, offset is an integer as different as possible for each UE, mod is an operator that computes a remainder of a division between two operands, T is a reception interval of the buffer state information or the CSI, and $T_{sch\_int}$ is a duration of the scheduling interval.

20. The method of claim 14, further comprising the steps of:

estimating the buffer state of the UE by calculating a difference between previous buffer state information and an amount of packet data received after the previous buffer state information; and

discontinuing the periodic reception of the buffer state information and the CSI, if the buffer state estimate is less than a predetermined threshold.

21. The method of claim 20, further comprising the step of transmitting to the UE a scheduling release message requesting termination of the transmission of the buffer state information and the CSI.

22. The method of claim 14, wherein a reception interval of the buffer state information is longer than a CSI reception interval.

23. The method of claim 14, wherein when the UE communicates with at least two Node Bs in a soft handover, a reception interval of the buffer state information is longer than a CSI reception interval.

24. The method of claim 14, wherein a reception interval of the buffer state information is shorter than a CSI reception interval.

25. The method of claim 14, wherein when the CSI reflects an uplink channel state change over a long term enough to overcome long-term fading, a reception interval of the buffer state information is shorter than a CSI reception interval.

26. The method of claim 14, wherein the different reception intervals of the buffer state information and the CSI are determined according to a quality of service (QoS) requirement for the uplink packet data service and radio resources available to the Node B for the uplink packet data service.

27. A transmitter in a user equipment (UE) for transmitting buffer state information and channel state information (CSI) for scheduling an uplink packet data service in a mobile communication system supporting the uplink packet data service, the buffer state information indicating a state of a data buffer for storing packet data to be transmitted from the UE and the CSI indicating an uplink transmit power of the UE, the transmitter comprising:

a transmission start and end decider for determining a transmission start and end of the buffer state information and the CSI by comparing an amount of packet data stored in the data buffer with a predetermined threshold, the transmission start being determined as a time when the data amount is at least equal to the predetermined threshold; and

a transmission time decider for acquiring different transmission intervals of the buffer state information and the CSI, and determining different transmission times for the buffer state information and the CSI according to the acquired transmission intervals, wherein the transmission start is used as a reference time;

a buffer state transmitter for periodically transmitting the buffer state information at the buffer state transmission times; and

a CSI transmitter for periodically transmitting the CSI at the CSI transmission times.

**28.** The transmitter of claim 27, wherein the buffer state transmitter comprises:

a switch for receiving the buffer state information at each of the buffer state transmission time;

a cyclic redundancy code (CRC) adder for attaching a CRC to the buffer state information in order to detect transmission errors from the buffer station information; and

a channel encoder for channel-encoding the CRC-attached buffer state information and transmitting the channel-encoded buffer state information.

**29.** The transmitter of claim 27, wherein the CSI transmitter comprises:

a switch for receiving the CSI at each of the CSI transmission times; and

a channel encoder for channel-encoding the CSI and transmitting the channel-encoded CSI.

**30.** The transmitter of claim 27, wherein the buffer state transmitter and the CSI transmitter transmit the buffer state information and the CSI in assigned areas of a predetermined scheduling interval, and the different transmission intervals of the buffer state information and the CSI are integer multiples of a duration of the scheduling interval.

**31.** The transmitter of claim 30, wherein the buffer state transmitter and the CSI transmitter transmit the buffer state information and the CSI in the assigned areas of scheduling intervals from the reference time point, by integer multiples of the different transmission intervals.

**32.** The transmitter of claim 30, wherein the buffer state transmitter and the CSI transmitter transmit the buffer state information and the CSI in the assigned areas of scheduling intervals from predetermined reference scheduling intervals for the buffer state information and the CSI, after the reference time, by integer multiples of the different transmission intervals.

**33.** The transmitter of claim 32, wherein each of the reference scheduling intervals is determined by

$$(CNT_{sch\_int} - offset)mod(T/T_{sch\_int}) = 0$$

where $CNT_{sch\_int}$ is an index of the reference scheduling interval, offset is an integer as different as possible[←**SEE NOTE ABOVE.]** for each UE, mod is an operator that computes a remainder of a division between two operands, T is a transmission interval of the buffer state information or the CSI, and $T_{sch\_int}$ is a duration of the scheduling interval.

**34.** The transmitter of claim 27, wherein the transmission time decider determines the transmission end as a time when the amount of the packet data stored in the data buffer is less than the threshold.

**35.** The transmitter of claim 27, wherein the transmission time decider determines the transmission end as a time when a scheduling release message is received from the Node B, after the transmission state time point, and the scheduling release message requests termination of the transmission of the buffer state information and the CSI.

**36.** The transmitter of claim 27, wherein a transmission interval of the buffer state information is longer than a CSI transmission interval.

**37.** The transmitter of claim 27, wherein when the UE communicates with at least two Node Bs in a soft handover, a transmission interval of the buffer state information is longer than a CSI transmission interval.

**38.** The transmitter of claim 27, wherein a transmission interval of the buffer state information is shorter than a CSI transmission interval.

**39.** The transmitter of claim 27, wherein when the CSI reflects an uplink channel state change over a term that is long enough to overcome long-term fading, a transmission interval of the buffer state information is shorter than a CSI transmission interval.

**40.** The transmitter of claim 27, wherein the different transmission intervals of the buffer state information and the CSI are determined according to a quality of service (QoS) requirement for the uplink packet data service and radio resources available to receive the uplink packet data service.

**41.** A receiver in a Node B for receiving buffer state information and channel state information (CSI) from a user equipment (UE) for scheduling an uplink packet data service in a mobile communication system supporting the uplink packet data service, comprising:

a reception time decider for acquiring different reception intervals of the buffer state information and the CSI, and determining reception times for the buffer state information and the CSI according to the different reception intervals using a reception start time of the buffer state information and the CSI as a reference time point; a buffer state receiver for determining if the buffer state information has been initially received from the UE, identifying a time when the buffer state information has been initially received as the reception start time point, and periodically receiving the buffer state information at the determined buffer state reception times; and a CSI receiver for periodically receiving the CSI at the determined CSI reception times.

**42.** The receiver of claim 41, wherein the buffer state receiver comprises:

a switch for acquiring received data including the buffer state information and a cyclic redundancy code (CRC) of the received data for transmission error detection, continuously receiving the received data before the reception start time point, and receiving the received data at the determined buffer state reception times after the reception start time point; and a CRC checker for detecting the buffer state information from the received data, if the received data has no error by a CRC check.

**43.** The receiver of claim 41, wherein the CSI receiver comprises:

a switch for acquiring received data including the CSI at the determined CSI reception times; and a channel decoder for decoding the received data and detecting the CSI from the decoded data.

**44.** The receiver of claim 41, wherein the buffer state receiver and the CSI receiver receive the buffer state information and the CSI in assigned areas of a predetermined scheduling interval, and the different reception intervals of the buffer state information and the CSI are integer multiples of a duration of the predetermined scheduling interval.

**45.** The receiver of claim 44, wherein the buffer state receiver and the CSI receiver receive the buffer state information and the CSI in the assigned areas of scheduling intervals from the reference time, by integer multiples of the different reception intervals.

**46.** The receiver of claim 44, wherein the buffer state receiver and the CSI receiver receive the buffer state information and the CSI in the assigned areas of scheduling intervals from predetermined reference scheduling intervals for the buffer state information and the CSI, after the reference time, by integer multiples of the different reception intervals.

**47.** The receiver of claim 46, wherein each of the reference scheduling intervals is determined by

$$(CNT_{sch\_int} - offset)mod(T/T_{sch\_int}) = 0$$

where $CNT_{sch\_int}$ is an index of the reference scheduling interval, offset is an integer as different as possible[←**SEE NOTE ABOVE.**] for each UE, mod is an operator that computes a remainder of a division between two operands, T is a reception interval of the buffer state information or the CSI, and $T_{sch\_int}$ is a duration of the scheduling interval.

48. The receiver of claim 41, wherein the reception time decider estimates the buffer state of the UE by calculating a difference between previous buffer state information and an amount of packet data received after the previous buffer state information, and determines a reception end time as a time when the buffer state estimate is less than a predetermined threshold.

49. The receiver of claim 48, wherein the reception time decider controls a scheduling release message to be transmitted to the UE at the reception end time, and the scheduling release message requests termination of the transmission of the buffer state information and the CSI.

50. The receiver of claim 41, wherein a reception interval of the buffer state information is longer than a CSI reception interval.

51. The receiver of claim 41, wherein when the UE communicates with at least two Node Bs in a soft handover, a reception interval of the buffer state information is longer than a CSI reception interval.

52. The receiver of claim 41, wherein a reception interval of the buffer state information is shorter than a CSI reception interval.

53. The receiver of claim 41, wherein when the CSI reflects an uplink channel state change over a term that is long enough to overcome long-term fading, a reception interval of the buffer state information is shorter than a CSI reception interval.

54. The receiver of claim 41, wherein the different reception intervals of the buffer state information and the CSI are determined according to a quality of service (QoS) requirement for the uplink packet data service and radio resources available to the Node B for the uplink packet data service.

ROT level

Total ROT

Target ROT
level

EUDCH packet traffic

voice traffic

inter-cell interference

time

FIG.1A

ROT level

Target ROT
level

Total ROT

EUDCH packet traffic

voice traffic

inter-cell interference

time

FIG.1B

FIG.2

310

EUDCH Setup

312

REPORT OF REQUESTED DATA RATE AND CSI

300

314

Rate Indication

302

316

UL Packet data transmission

Node B1

UE

FIG.3

FIG.4

500

| Scheduling control channel (EU-SCHCCH) | UE ID,scheduling grant/ release message,allowed max data rate | UE ID,scheduling grant/ release message,allowed max data rate | UE ID,scheduling grant/ release message,allowed max data rate | UE ID,scheduling grant/ release message,allowed max data rate |
|---|---|---|---|---|
| | UE#1 | UE#2 | UE#3 | UE#4 |

FIG.5A

FIG.5B

EP 1 509 011 A2

Scheduling
assignment

NODE B

610          612

600          602                                    604    606

UE

$T_{sch\_int}$

Buffer
status   CSI

GENERATION OF PACKET                    COMPLETED TRANSMISSION OF
DATA FOR NODE B IN DATA BUFFER          PACKET DATA FROM DATA BUFFER

FIG.6

700

RNC

712

Node B2

DL TPC command
from Node B2

Uplink transmission

710

Node B1

714

Node B3

DL TPC command
from Node B1

DL TPC command
from Node B3

720

FIG.7

START

DETERMINE $T_{buffer}$ ──── 800

802

YES                    Soft
                      handover?                    NO

804

$T_{CSI} = T_{sch\_Int}$

806

$T_{CSI} = \lfloor P_{e,E-TFRI} / P_{e,TPC} \rfloor \times T_{buffer}$

END

FIG.8

Buffer status channel
coding ◄─────────────►◄───── CSI channel coding ─────►

| Buffer status | CRC | Channel Status Information (tx power or power margin) |

◄────────────────── $T_{sch\_int}=10ms$ ──────────────────►

# FIG.9

NODE B

Scheduling
assignment

Scheduling
release
message

1000          1002          1004

UE

1010     1012     1014     1016     1018

$CNT_{sch\_Int}$ = 10,11,12,13,14,15,16,17,18,19,20,21,22,23,24,25,26,27,28,29,30

$T_{CSI} = 4 \times T_{sch\_Int}$          $T_{sch\_Int}$

$T_{buffer} = 8 \times T_{sch\_Int}$

Buffer
status     CSI

(Event triggered report)

# FIG.10

FIG.11

FIG.12

START

1304 — $CNT_{sch\_Int}=CNT_{sch\_Int}+1$

MONITOR BUFFER STATE — 1300

1302

DATA AMOUNT >= THRES $_{buffer}$ ?

NO

YES

TRANSMIT BUFFER STATUS INFORMATION AND CSI — 1306

$CNT_{sch\_Int}=CNT_{sch\_Int}+1$ — 1308

MONITOR BUFFER STATE — 1310

1312

DATA AMOUNT < THRES $_{buffer}$ ?

NO

YES

1314

TIME TO TRANSMIT BUFFER STATUS INFORMATION?

NO

YES

TRANSMIT BUFFER STATUS INFORMATION — 1316

1318

TIME TO TRANSMIT CSI?

NO

YES

TRANSMIT CSI — 1320

1324

$CNT_{sch\_Int}=CNT_{sch\_Int}+1$

1322

UPLINK PACKET SERVICE TO BE CONTINUED?

YES

NO

END

FIG.13

FIG.14

START

CHANNEL DECODING OF
BUFFER STATUS — 1500

1508

$CNT_{ach\_int}=CNT_{ach\_int}+1$

Buffer status CRC check — 1502

1504

NO
CRC PASS?

YES

CSI CHANNEL DECODING — 1506

$CNT_{sch\_int}=CNT_{sch\_int}+1$ — 1510

BUFFER STATUS ESTIMATION — 1512

1514

NO
BUFFER STATUS ESTIMATE
$>=THRES_{buffer}$ ?

YES 1516

NO
TIME TO RECEIVE
BUFFER STATUS?

YES

CHANNEL DECODING OF
BUFFER STATUS — 1518

1530

$CNT_{ach\_int}=CNT_{ach\_int}+1$

Buffer status CRC check — 1520

1522

TIME TO
RECEIVE CSI?    NO

YES

CSI CHANNEL DECODING — 1524

TRANSMISSION OF
SCHEDULING RELEASE
MESSAGE — 1526

1528

UPLINK PACKET
SERVICE TO BE
CONTINUED?    YES

NO

END

FIG.15

EP 1 509 011 A2

FIG.16

START

$CNT_{sch\_int}=CNT_{sch\_int}+1$ — 1704

1700

INITIAL RECEPTION CONDITION SATISFIED?

NO

YES

EU-SCHCCH CHANNEL DECODING — 1702

CRC check — 1704

1708

CRC pass?

NO

YES

TRANSMISSION OF SCHEDULING ASSIGNMENT INFORMATION TO EUDCH TRANSMISSION CONTROLLER — 1710

1720

$CNT_{sch\_int}=CNT_{sch\_int}+1$

$CNT_{sch\_int}=CNT_{sch\_int}+1$ — 1712

BUFFER STATE MONITORING — 1714

1716

RECEPTION TO BE CONTINUED?

YES

NO

1718

UPLINK PACKET SERVICE TO BE CONTINUED?

YES

NO

END

FIG.17